(19) Europäisches Patentamt
European Patent Office
Office européen des brevets

(11) **EP 2 984 334 B1**

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(21) Anmeldenummer: **14708807.4**

(22) Anmeldetag: **05.03.2014**

(51) Int Cl.:
**F03D 1/06** (2006.01)

(86) Internationale Anmeldenummer:
**PCT/EP2014/000564**

(87) Internationale Veröffentlichungsnummer:
**WO 2014/166570 (16.10.2014 Gazette 2014/42)**

(54) **ROTORBLATT EINER WINDENERGIEANLAGE UND WINDENERGIEANLAGE**

ROTOR BLADE OF A WIND TURBINE AND WIND TURBINE

PALE DE ROTOR D'ÉOLIENNE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2013 DE 102013206437**

(43) Veröffentlichungstag der Anmeldung:
**17.02.2016 Patentblatt 2016/07**

(73) Patentinhaber: **Senvion GmbH**
**22297 Hamburg (DE)**

(72) Erfinder: **ERBSLÖH, Sascha**
**24784 Westerrönfeld (DE)**

(74) Vertreter: **Wallinger Ricker Schlotter Tostmann Patent- und Rechtsanwälte mbB Zweibrückenstraße 5-7 80331 München (DE)**

(56) Entgegenhaltungen:
**EP-A1- 2 253 834**

• **Erich Hau: "Wind Turbines", 31. Dezember 2006 (2006-12-31), Springer Verlag, XP002724725, ISBN: 3-540-24240-6 Seiten 113-115,**

**Beschreibung**

Die Erfindung betrifft ein Rotorblatt einer Windenergieanlage mit einer Längserstreckung, die sich von einer Rotorblattwurzel zu einer Rotorblattspitze erstreckt, wobei das Rotorblatt wenigstens in einem Bereich seiner Längserstreckung ein aerodynamisches Querschnittsprofil aufweist, das eine Profilvorderkante und eine Profilhinterkante aufweist, die über eine Saugseite und eine Druckseite des Querschnittsprofils verbunden sind, sowie eine entsprechende Windenergieanlage.

Moderne Windenergieanlagen mit zwei oder mehr Rotorblättern werden im Bereich größerer Windgeschwindigkeiten zur Lastbegrenzung mit veränderlichen Blatteinstellwinkeln, auch Pitchwinkel genannt, betrieben. Durch eine Vergrößerung der Betriebsgröße Blatteinstellwinkel wird der aerodynamische Anstellwinkel bei höheren Windgeschwindigkeiten verkleinert, um den Auftrieb und die entnommene Leistung zu reduzieren. Dabei ist der Anstellwinkel der Winkel zwischen der Anströmrichtung des Windes und der Sehne, also der Verbindungslinie zwischen der Vorderkante und der Hinterkante des aerodynamischen Rotorblattprofils. Im Rahmen der vorliegenden technischen Lehre ist der Zusammenhang zwischen Rotorblatteinstellwinkel und Anstellwinkel wie üblich so definiert, dass eine Erhöhung des Blatteinstellwinkels zu einer Verkleinerung des Anstellwinkels führt. Der Anstellwinkel kann auch negativ werden.

Rotorblätter von Windenergieanlagen weisen außerdem einen sogenannten Twist bzw. eine Verwindung auf, sind also entlang ihrer Längserstreckung so verwunden, dass die Sehne, also die Verbindungslinie zwischen Profilvorderkante und Profilhinterkante im Verlauf der Längserstreckung des Rotorblatts von der Blattwurzel zur Blattspitze hin rotiert wird. Die durch die Sehne aufgespannte Fläche entlang der Längserstreckung des Rotorblatts bildet somit eine Art verzerrte Schraubenfläche derart, dass der aerodynamische Anstellwinkel an der Blattspitze kleiner ist als an der Blattwurzel. Dadurch wird erreicht, dass das Rotorblatt bei kleinen und mittelgroßen Windgeschwindigkeiten, bei denen noch keine Blattverstellung erfolgt, mit der Rotorblattspitze im Mittel mit einem optimalen Anstellwinkel betrieben wird und hier die größte Leistung entnommen wird. Die in Bezug auf die Rotorfläche inneren Teile des Rotorblatts, also die blattwurzelnahen Bereiche, tragen hierzu weniger bei. In diesem Betriebsmodus beträgt der Blatteinstellwinkel vorliegend definitionsgemäß 0°. Ferner kann hier das Rotorblatt in eine windabgewandte Ruheposition, die sogenannte Fahnenstellung, verschwenkt werden, die in etwa einer 90°-Stellung des Blatteinstellwinkels nach der vorliegenden Definition entspricht.

Der Größenzuwachs von Rotorblättern war bislang nicht grundlegend durch die Profilaerodynamik limitiert. An die steigenden Anforderungen zugeschnittene Profile haben bislang in der Entwicklung geholfen, Wirkungsgrade zu verbessern, und vor allem im Wurzelbereich strukturkompatiblere Geometrien ermöglicht.

Im Blattspitzenbereich ist die aerodynamische Effizienz bzw. Gleitzahl als Verhältnis von Auftrieb zu Widerstand maßgeblich. Dieses hat ein Maximum bei kleinen positiven Anstellwinkeln $\alpha_{opt}$. Das Profil wird vorzugsweise an diesem Punkt betrieben, um hohe Rotorwirkungsgrade zu erhalten.

Weiter haben Rotorblattprofile einen abgegrenzten Bereich, in dem eine Strömung angelegt ist und eine aerodynamische Effizienz erzielt werden kann. Bei zu hohen Anstellwinkeln löst sich die Strömung an der Saugseite ab (positiver Stall), und bei zu niedrigen Anstellwinkeln an der Druckseite (negativer Stall). Dieser Betriebsbereich war bisher ausreichend und führte nicht zu signifikanten Einschränkungen. Durch Windscherung sowie Böen verursachte Anstellwinkelschwankungen, insbesondere Offshore, ist allerdings absehbar, dass größere Rotorblätter diesen Bereich bald vollständig ausnutzen und sogar überschreiten werden. Um dann Stall-freien Betrieb zu gewährleisten, wird eine individuelle Pitchregelung (IPC, "Individual Pitch Control") unumgänglich werden.

Die IPC muss dann den Blatteinstellwinkel während des Umlaufs des Rotors im oberen Bereich der Rotorebene erhöhen, also den Anstellwinkel verringern, und im unteren Bereich verringern. Diese Anpassungen haben nicht nur einen negativen Einfluss auf den Rotorwirkungsgrad, sondern bringen auch einen hohen technischen Aufwand mit sich.

Ein weiteres aerodynamisches Phänomen, das die Regelung der Rotorblatteinstellwinkel in dem Bereich hoher Windgeschwindigkeiten erschwert, ist die sogenannte Stall-Hysterese, die ein Ergebnis schneller Anstellwinkeländerungen ist. Solche schnellen Anstellwinkeländerungen durch Turbulenzen, durch den Turmeinfluss oder auch Blatttorsion führen zu einem momentanen Überschwingen des maximalen oder minimalen Auftriebsbeiwertes in der Nähe der Strömungsablösung und zu einer momentanen Verschiebung des Ablösepunktes der Strömung. Die Rückkehr zum Ausgangszustand erfolgt in Form einer Hysterese. Dieser Effekt ist beispielsweise in E. Hau, "Windkraftanlagen - Grundlagen, Technik, Einsatz, Wirtschaftlichkeit", 4. Auflage, Springer-Verlag Berlin Heidelberg, 2008, Seite 120, beschrieben. Im Grenzbereich des Betriebs der Windenergieanlage wird durch diesen Effekt die Blattwinkelsteuerung erschwert.

EP 2 253 834 A1 betrifft ein Rotorblatt für eine Windenergieanlage. Als alternative Hilfsmittel zur Beeinflussung der Umströmung des Rotorblatts sind Gurney Flaps, schwenkbare Vorflügel vor der Profilvorderkante, Vortexgeneratoren u.a. offenbart.

Demgegenüber liegt der vorliegenden Erfindung die Aufgabe zugrunde, Rotorblätter sowie Windenergieanlagen mit entsprechenden Rotorblättern zur Verfügung zu stellen, mit denen eine höhere Energieausbeute und eine gute Beherrschbarkeit auch bei hohen Windgeschwindigkeiten erreicht wird.

Diese Aufgabe wird durch ein Rotorblatt einer Windenergieanlage mit einer Längserstreckung, die sich von einer Rotorblattwurzel zu einer Rotorblattspitze erstreckt, wobei das Rotorblatt wenigstens in einem Bereich seiner Längserstreckung ein aerodynamisches Querschnittsprofil aufweist, das eine Profilvorderkante und eine Profilhinterkante aufweist, die über eine Saugseite und eine Druckseite des Querschnittsprofils verbunden sind, gelöst, das dadurch weitergebildet ist, dass das Rotorblatt in einem blattspitzennahen Abschnitt ein Kombinationsprofil aus einem Hauptprofil, einem vor einer Profilvorderkante des Hauptprofils angeordnetem Vorflügel und einem Strömungskanal zwischen dem Vorflügel und dem Hauptprofil aufweist, wobei in dem blattspitzennahen Abschnitt auf der Saugseite des Hauptprofils Vortexgeneratoren angeordnet sind, wobei der Vorflügel eine Verwindung aufweist, die einem Verlauf der Profilvorderkante des Hauptprofils angepasst ist und/oder der Vorflügel blattspitzenseitig und/oder blattwurzelseitig gepfeilt ausgebildet ist, wobei der Vorflügel mittels wenigstens eines Halters am Hauptprofil gehalten wird, der ein in einer Strömungsrichtung im Strömungskanal symmetrisches aerodynamisches Profil aufweist.

Die Erfindung beruht auf dem Grundgedanken, zwei unterschiedliche aerodynamische Strukturen in ein Zusammenwirken zu bringen. Entsprechend ermöglicht die erfindungsgemäße Kombination aus einem Profil mit Vorflügel, auch "Slat" genannt, und Hauptprofil mit saugseitig angebrachten Vortexgeneratoren (VG) im Blattspitzenbereich die Erhöhung des verfügbaren Anstellwinkelbereichs in einer Größenordnung von 8° bis 10° und eine Verringerung der Stall-Hysterese. Das Kombinationsprofil, im Rahmen der vorliegenden Erfindung auch Slat-VG-Profil oder "SVG"-Profil genannt, ist vor allem für den Blattspitzenbereich bzw. die äußere Blatthälfte gedacht.

Der Vorflügel ist dabei in der Regel bedeutend kleiner als das Hauptprofil, und zwar sowohl in der Sehnenlänge als auch in der relativen Dicke. Der Vorflügel ist an der Vorderkante des Hauptprofils positioniert und schließt an seiner Druckseite mit der Vorderkante bzw. der Saugseite des Hauptprofils einen Spalt bzw. einen Strömungskanal ein. Der Vorflügel ist vorzugsweise in einer Glasfaser-Sandwich-Struktur ausgebildet, weist also bei geringem Gewicht eine hohe Stabilität auf.

Vortexgeneratoren werden verwendet, um eine Grenzschicht einer Luftströmung kontrolliert zu verwirbeln. Dadurch erhöht sich zwar der Widerstandsbeiwert des Profils geringfügig, jedoch wird die Grenzschicht zu höheren Anstellwinkeln hin stabilisiert.

Aerodynamisch wirkt sich die erfindungsgemäße Kombination aus Vorflügel und Vortexgeneratoren so aus, dass zunächst der Strömungskanal zwischen dem Vorflügel und dem Hauptprofil zusätzliche Luft auf die Saugseite des Kombinationsprofils bzw. des Hauptprofils lenkt. Dies stabilisiert die Grenzschicht, die sich in der Folge später von der Saugseite des Profils ablöst als dies bei einem gleichartigen Profil ohne Vorflügel der Fall wäre.

Die Vortexgeneratoren sind bei dem erfindungsgemäßen Kombinationsprofil hinter dem Vorflügel so platziert, dass sie noch in dem Bereich liegen, in dem die Grenzschicht sich noch nicht von der Saugseite abgelöst hat. Da der Vorflügel die Grenzschicht auf der Saugseite bereits stärker stabilisiert als dies bei herkömmlichen Profilen der Fall ist, können die Vortexgeneratoren weiter in Richtung Hinterkante des Profils angeordnet werden als dies bei herkömmlichen der Fall ist. Damit wird erreicht, dass die Grenzschicht sich selbst bei großen positiven Anstellwinkeln nicht von der Saugseite des Profils ablöst. Hierdurch wird der Bereich von Anstellwinkeln bzw. Blatteinstellwinkeln, in dem die IPC arbeitet, zu höheren Anstellwinkeln hin deutlich vergrößert.

Gleichzeitig wird durch das erfindungsgemäße Zusammenspiel aus Vorflügel und Vortexgeneratoren die Grenzschicht soweit stabilisiert, dass auch die Stall-Hysterese signifikant verkleinert wird bzw. zum Verschwinden gebracht wird. Dies erhöht die Beherrschbarkeit der Blatteinstellwinkelregelung in einem größeren Bereich von Blatteinstellwinkeln und Anstellwinkeln.

Das erfindungsgemäße Profil ist sehr robust gegen Strömungsablösungen ausgehend von der Vorderkante, wobei der Einsatz von Vortexgeneratoren auf der Saugseite dies dahingehend ergänzt, dass von der Hinterkante ausgehende Ablösungen verhindert werden. Zusammen mit der Verringerung der Stall-Hysterese bedeutet dies, dass das Kombinationsprofil somit das dynamische Überziehverhalten verringert sowie starke Fluktuationen des Widerstandbeiwertes bei extremen Anstellwinkeln verhindert.

Vorzugsweise sind die Vortexgeneratoren in einer Sehnenrichtung des Hauptprofils hinter einem Punkt der maximalen Dicke des Hauptprofils angeordnet, insbesondere in einem Bereich zwischen 50% und 95%, insbesondere zwischen 60% und 75%, der Sehne des Hauptprofils. Der Punkt der maximalen Dicke des Hauptprofils ist häufig der Punkt, an dem der Druckwiderstand für die Grenzschicht bzw. die umströmende Luft wieder zunimmt, so dass ab diesem Punkt eine Ablösung der Grenzschicht von der Saugseite des Profils zu erwarten ist. Eine Anordnung der Vortexgeneratoren in einem derart rückwärtigen, also zur Profilhinterkante, verschobenen Bereich ist besonders in der Kombination mit einem Vorflügel sinnvoll, da mittels des Vorflügels der Punkt der Ablösung der Grenzschicht von der Saugseite nach hinten verschoben wird.

Im Rahmen der vorliegenden Anmeldung sind mit dem Begriff "insbesondere" bezeichnete Merkmale generell als fakultative, also nicht zwingende, Merkmale zu verstehen.

Die Vortexgeneratoren können erfindungsgemäß so ausgelegt sein, dass sie entweder co-rotierende oder contra-rotierende Wirbel erzeugen. Dies bezeichnet Wirbel, die jeweils die gleiche Rotationsrichtung aufweisen (co-rotierend) oder paarweise einander entgegengesetzte Rotationsrichtungen (contra-rotierend).

Vorzugsweise weist der blattspitzennahe Abschnitt in Längsrichtung des Rotorblatts eine Länge von zwischen 5% und 30%, insbesondere zwischen 15% und 25% der Länge des Rotorblatts von der Rotorblattwurzel zur Rotorblattspitze auf, wobei insbesondere der blattspitzennahe Abschnitt in Längsrichtung des Rotorblatts von der Rotorblattwurzel an gerechnet zwischen 50% und 98% der Längserstreckung des Rotorblatts angeordnet ist, insbesondere in einem Bereich zwischen 60% und 90% der Längserstreckung. Der blattspitzennahe Abschnitt befindet sich somit in der äußeren Rotorblatthälfte. Die Bereichsangaben sind im Rahmen der vorliegenden Erfindung dahingehend zu verstehen, dass, wenn die Länge des blattspitzennahen Abschnitts beispielsweise 20% betragen soll, dieser Abschnitt innerhalb des Bereichs zwischen 50% und 98% der Längserstreckung angeordnet ist, also beispielsweise von 70% bis 90% oder von 55% bis 75%.

Der Vorflügel ist vorzugsweise mit einer turbulenten Grenzschicht ausgelegt. Diese Auslegung verbessert die Anlage der Strömung im weiteren Verlauf an dem Hauptprofil und vergleichmäßigt den Luftstrom bei wechselnden Bedingungen im Verlauf einer Rotorumdrehung. Die Auslegung des Vorflügels sollte von einer turbulenten Grenzschicht ausgehen, wobei diese im sauberen Zustand des Vorflügels auch laminar sein kann. Vorteilhafterweise ist eine angeraute oder strukturierte Oberfläche vorgesehen.

Vorzugsweise weist der Vorflügel eine Ausdehnung von weniger als 30% der gesamten Sehnenlänge des Kombinationsprofils auf.

In einer vorteilhaften Ausführungsform ist der Vorflügel in einer Fortsetzung der Profilvorderkante des Rotorblatts außerhalb des blattspitzennahen Abschnitts angeordnet und geformt. Damit ist das Profil des Rotorblatts mit einer einheitlichen Profilvorderkante versehen, die auch im blattspitzennahen Bereich mit dem Vorflügel durchgeführt bzw. fortgesetzt ist. Dies hilft, Turbulenzen in Bezug auf die Längserstreckung des Rotorblatts zu vermindern.

Ebenfalls erfindungsgemäß weist der Vorflügel eine Verwindung auf, die einem Verlauf der Profilvorderkante des Hauptprofils angepasst ist und/oder ist der Vorflügel blattspitzenseitig und/oder blattwurzelseitig gepfeilt ausgebildet. Diese Maßnahmen vermindern ebenfalls die Bildung von Turbulenzen beim Übergang zwischen einem einstückigen Profil ohne Vorflügel und dem Kombinationsprofil.

Vorzugsweise weist die Kombination aus Vorflügel und Hauptprofil eine relative Dicke von weniger als 35% auf, wobei insbesondere die maximale Dicke an radialen Positionen von mehr als 40% positioniert ist. In diesem Zusammenhang bedeutet die radiale Position, dass die Punkte größter Dicke in Richtung der Sehne bei mehr als 40% des Abstandes zwischen Profilvorderkante und Profilhinterkante, insbesondere des Hauptprofils und/oder des Kombinationsprofils, positioniert sind.

Ebenfalls erfindungsgemäß wird der Vorflügel mittels wenigstens eines Halters am Hauptprofil gehalten, wobei insbesondere Übergänge zwischen dem Halter einerseits und dem Vorflügel und/oder dem Hauptprofil andererseits abgerundet sind. Die Abrundungen sorgen für einen laminaren und ablösungsarmen Luftfluss in diesen Übergangsbereichen. Der wenigstens eine Halter weist ein in einer Strömungsrichtung im Strömungskanal symmetrisches aerodynamisches Profil auf. Ein solches aerodynamisches Profil ist ein symmetrisches Profil mit einer abgerundeten Profilvorderkante und einer spitz zulaufenden Profilhinterkante mit geringer Profildicke.

Vorzugsweise ist der Vorflügel über eine Steckverbindung lösbar mit dem wenigstens einen Halter verbunden oder verbindbar. So kann der Vorflügel bei Abnutzung sehr einfach ausgetauscht werden.

Ebenfalls vorzugsweise ist der wenigstens eine Halter, insbesondere mittels einer Verklebung, mit einem Steg des Hauptprofils verbunden. Damit ist der Halter und somit der Vorflügel mit einem tragenden mechanischen Element des Rotorblatts verbunden und somit besonders stabil gelagert.

In einer bevorzugten Ausführungsform ist der Vorflügel so ausgelegt, dass ein Hauptstaudruckpunkt des Kombinationsprofils aus Vorflügel und Hauptprofil auf dem Vorflügel liegt. Zusätzlich oder alternativ dazu ist vorzugsweise vorgesehen, dass der Vorflügel wenigstens im Bereich einer Profilvorderkante des Vorflügels einen Erosionsschutzlack und/oder eine Opferschicht aufweist. Wenn der Vorflügel somit einen entsprechenden Erosionsschutzlack und/oder eine großzügige Opferschicht aufweist, wird das darunterliegende Laminat selbst bei starker, lang anhaltender Erosion nicht beschädigt. Dies ermöglicht verlängerte Serviceintervalle und gleichbleibende aerodynamische Güte des Profils, insbesondere, wenn der Vorflügel des Kombinationsprofils von vornherein mit turbulenter Grenzschicht ausgelegt wurde.

Diese Verschmutzungsunempfindlichkeit und speziell die Auslegung des Vorflügels mit turbulenter Grenzschicht machen das Profil weitestgehend verschmutzungsunempfindlich, so dass der Vorflügel auch als Erosionsschutz für das gesamte Kombinationsprofil dienen kann und wenn nötig, ausgetauscht werden kann. Dies macht durch Erosion verursachte aufwendige Reparaturarbeiten vor Ort am Hauptflügel unnötig. Solche Reparaturarbeiten gilt es insbesondere offshore zu vermeiden.

Schließlich wird die der Erfindung zugrundeliegende Aufgabe auch durch eine Windenergieanlage mit wenigstens einem zuvor beschriebenen erfindungsgemäßen Rotorblatt gelöst. Die für das Rotorblatt genannten Merkmale, Vorteile und Eigenschaften gelten auch für die Windenergieanlage mit dem wenigstens einen Rotorblatt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1a), b)  den Verlauf des Auftriebbeiwertes $C_L$ in Abhängigkeit des Anstellwinkels $\alpha$ bei herkömmlichen und bei erfindungsgemäßen Profilen,

Fig. 2  eine Querschnittsdarstellung durch ein erfindungsgemäßes Kombinationsprofil,

Fig. 3  eine schematische Darstellung einer Draufsicht auf ein erfindungsgemäßes Rotorblatt,

Fig. 4  eine schematische Darstellung eines Abschnitts eines erfindungsgemäßen Rotorblatts,

Fig. 5  eine schematische Draufsicht auf einen Vorflügel eines erfindungsgemäßen Rotorblatts,

Fig. 6  eine schematische Querschnittsdarstellung eines erfindungsgemäßen Kombinationsprofils,

Fig. 7  eine schematische Querschnittsdarstellung eines weiteren erfindungsgemäßen Kombinationsprofils,

Fig. 8a), b)  die Verläufe des Auftriebsbeiwertes $C_L$ im dynamischen Fall und des Widerstandsbeiwertes $C_W$ im statischen Fall für verschiedene Profile als Funktion des Anstellwinkels und

Fig. 9a), b)  Perspektivdarstellungen zweier erfindungsgemäßer Kombinationsprofile.

In den Zeichnungen sind jeweils gleiche oder gleichartige Elemente und/oder Teile mit denselben Bezugsziffern versehen, so dass von einer erneuten Vorstellung jeweils abgesehen wird.

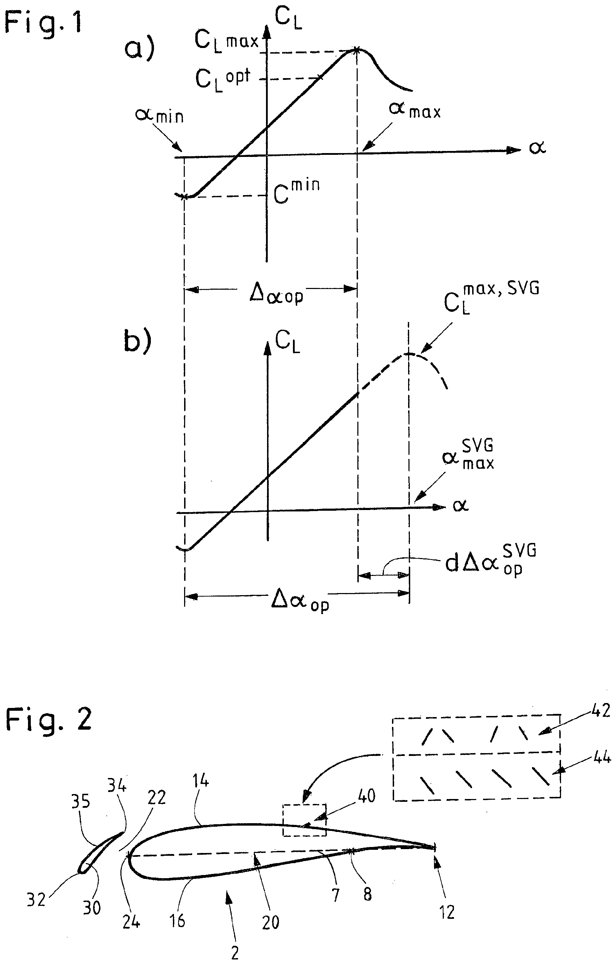

In Fig. 1a) ist der Verlauf des Auftriebsbeiwerts bzw. "lift coefficient" $C_L$ als Funktion des Anstellwinkels $\alpha$ dargestellt. Es ergibt sich für ein herkömmliches Rotorblatt ein operativer bzw. verfügbarer Anstellwinkelbereich $\Delta\alpha_{op}$ zwischen einem maximalen Anstellwinkel $\alpha_{max}$ und einem minimalen Anstellwinkel $\alpha_{min}$. Beim maximalen Anstellwinkel $\alpha_{max}$ tritt im stationären Fall eine Ablösung der Luftströmung von der Saugseite ein, bei einem minimalen Anstellwinkel $\alpha_{min}$ eine Ablösung von der Druckseite. An dieser Stelle weist der Auftriebsbeiwert einen minimalen und negativen $C_L^{min}$ auf. Im maximalen Anstellwinkel $\alpha_{max}$ beträgt der Widerstandsbeiwert den maximalen Wert $C_L^{max}$.

Jenseits dieses Anstellwinkels $\alpha_{max}$ treten Strömungsablösungen auf der Saugseite auf, die den Auftriebskoeffizienten bzw. Auftriebsbeiwert wieder verringern. Im normalen Betrieb wird das Rotorblatt bei einem etwas kleineren Anstellwinkel $\alpha$ betrieben, bei dem ein optimaler Auftriebsbeiwert $C_L^{opt}$ bzw. eine optimale Gleitzahl $C_L/C_W$ herrscht.

In Fig. 1b) ist die entsprechende Kurve für ein erfindungsgemäßes Rotorblattprofil mit Kombinationsprofil aus Vorflügel und Hauptprofil mit Vortexgenerator gezeigt. Im Bereich großer Anstellwinkel $\alpha$ ist der nutzbare Bereich, wie in der gestrichelten Kurve gezeigt, erweitert. Der operative Bereich $\Delta\alpha_{op}$ ist größer als der entsprechende Bereich in Fig. 1a). Der Unterschied $d\Delta\alpha_{op}^{SVG}$ (SVG für "Slat-Vortexgenerator") kann bis zu 8° bis 10° betragen. In diesem Bereich findet noch keine Strömungsablösung an der Saugseite statt, so dass auch ein höherer Auftriebsbeiwert $C_L^{max,SVG}$ erreichbar ist.

In Fig. 2 ist ein entsprechendes Kombinationsprofil aus einem Vorflügel 30 und einem Hauptprofil 20 eines erfindungsgemäßen Rotorblatts 2 im Querschnitt dargestellt. Das Hauptprofil 20 erstreckt sich von einer Profilvorderkante 24 des Hauptprofils 20 bis zu einer Profilhinterkante 12 entlang einer Sehne 7. Vor der Profilvorderkante 24 ist ein Vorflügel 30 mit einer eigenen Profilvorderkante 32 und Profilhinterkante 34 sowie einer Saugseite 35 und einer gegenüberliegenden Druckseite (ohne Bezugszeichen) dargestellt. Zwischen der Druckseite des Vorflügels 30 und der Vorderkante 24 bzw. Saugseite 14 des Hauptprofils 20 ist ein Strömungskanal 22 gebildet, in dem Luft auf die Saugseite 14 des Hauptprofils 20 gelenkt wird. Der Saugseite 14 gegenüber liegt die Druckseite 16 des Hauptprofils 20.

Im hinteren Bereich der Saugseite 14 des Hauptprofils 20 ist ein Vortexgenerator 40 aus einer Reihe von Vortexgeneratoren 40 dargestellt, die dazu dienen, den durch den Strömungskanal 22 stabilisierten Luftstrom zu verwirbeln. So wird eine "energetisierte" turbulente Grenzschicht erzeugt, die sich bis idealerweise zur Profilhinterkante 12 nicht von der Saugseite 14 ablöst. Die Reihe von Vortexgeneratoren 40 kann, wie in dem oberen Figurenausschnitt gezeigt, in einer paarweisen Konfiguration 42 oder einer parallelen Konfiguration 44 angeordnet sein. Dabei erzeugt die paarweise Konfiguration 42 contra-rotierende, also gegensinnig rotierende, Vortices bzw. Wirbel, während die parallele Konfiguration 4 zur Bildung co-rotierender, also gleichsinnig rotierender Wirbel führt.

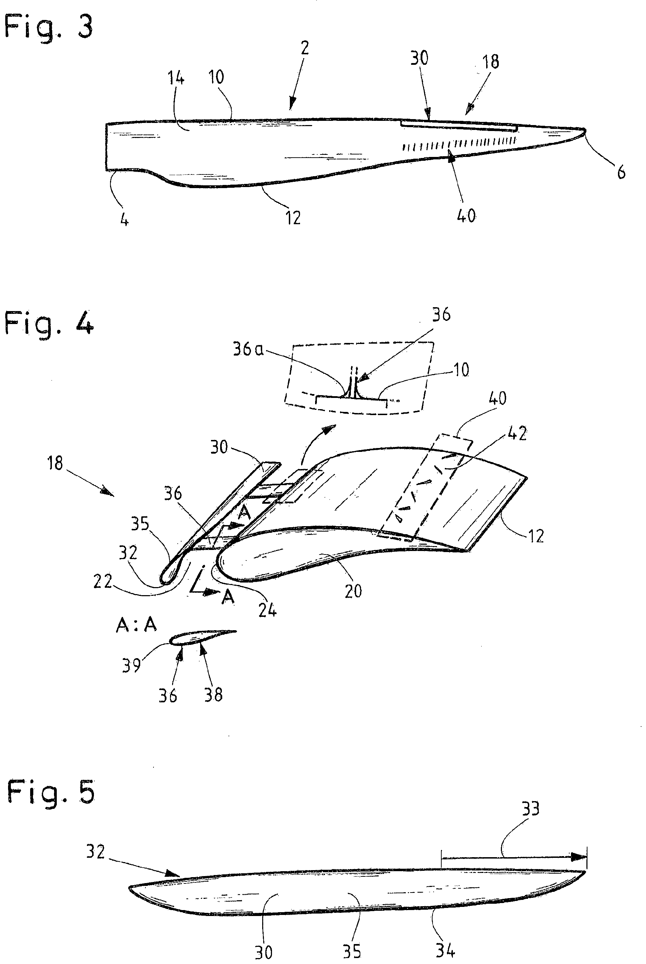

In Fig. 3 ist eine Draufsicht auf ein erfindungsgemäßes Rotorblatt 2 dargestellt. Dieses erstreckt sich von einer Rotorblattwurzel 4 zur Rotorblattspitze 6. Ebenfalls dargestellt sind die Profilvorderkante 10 und die Profilhinterkante 12. Die Draufsicht ist auf die Saugseite 14. In einem blattspitzennahen Abschnitt 18 weist das Rotorblatt 2 an seiner Vorderkante 10 einen Vorflügel 30 auf, dem in Strömungsrichtung Vortexgeneratoren 40 folgen, die in der hinteren Blatthälfte angeordnet sind.

Fig. 4 zeigt eine schematische Perspektivdarstellung eines Teils des blattspitzennahen Abschnitts 18 mit einem Kombinationsprofil aus Vorflügel 30 und Hauptprofil 20. Auf der Saugseite 14 des Vorflügels 20 ist eine Reihe von Vortexgeneratoren in einer paarweisen Konfiguration 42 dargestellt. Es handelt sich somit um ein erfindungsgemäßes "SVG"-Profil. Der Vorflügel 30 ist in seinem Profil ebenfalls mit Profilvorderkante 32, Profilhinterkante 34 und Saugseite 35 dargestellt.

Gemäß dem Schnitt A-A ist im unteren Bereich der Fig. 4 das symmetrische Profil 38 eines Halters 36 gezeigt, mit dem der Vorflügel 30 am Hauptprofil 20 befestigt ist. Dieses symmetrische Profil 38 weist unter anderem eine Nase oder Vorderkante 39 auf.

Im oberen Bereich von Fig. 4 ist in einem Ausschnitt in einem gestrichelten Kasten eine Draufsicht auf den Übergangsbereich von der Profilvorderkante 10 des Hauptprofils 20 zum Halter 36 gezeigt. Dieser weist im Bereich des Übergangs zu der Vorderkante 10 Abrundungen 36a auf, die dafür sorgen, dass auch in diesem Übergangsbereich eine ungestörte Strömung vorherrscht und keine zusätzlichen Verwirbelungen auftreten.

In Fig. 5 ist eine Darstellung des Vorflügels 30 von oben auf die Saugseite 35 gezeigt, wobei eine gewisse Pfeilung 33 an den beiden Enden in Längserstreckungsrichtung deutlich wird. Außerdem ist der Vorflügel 30 entsprechend dem eigentlichen Profil des Rotorblatts 2 verwunden, um dessen Profilvorderkante 10 fortzuführen.

Alternativ kann der Vorflügel 30 auch der durchgehenden Linie der Profilvorderkante 10 des Rotorblatts 2 vorgelagert sein, so dass das Hauptprofil 20 in dem Fall dem Rotorblattprofil 8 selbst entspricht.

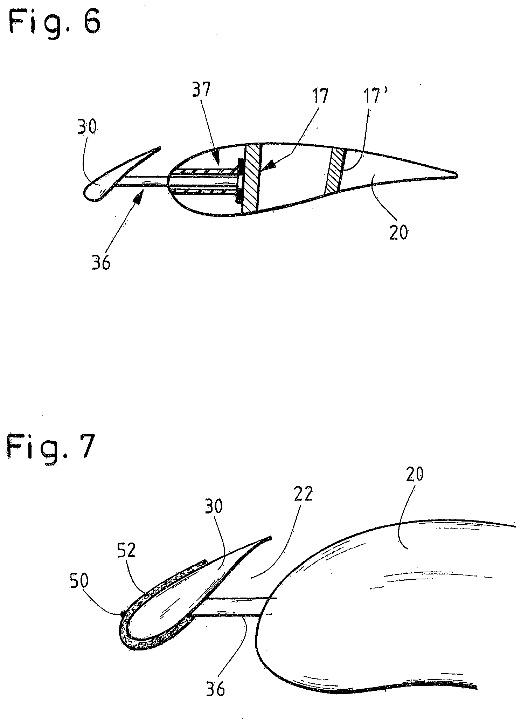

Fig. 6 zeigt eine Querschnittsdarstellung durch das Kombinationsprofil an der Stelle, an der eine Halterung 36 vorgesehen ist. Diese ist mittels einer Verklebung 37 mit einem der Hauptstege 17, 17' des Rotorblattprofils stabil befestigt. Nicht dargestellt ist, dass die Verbindung zwischen der Halterung 36 und dem Vorflügel 30 eine Steckverbindung sein kann. Es kann auch eine Steckverbindung zwischen der Halterung 36 und dem Steg 17 bzw. dem Hauptprofil 20 vorgesehen sein, so dass entweder nur der Vorflügel 30 oder ein Bauteil aus Vorflügel 30 und Halterung 36 einfach ausgetauscht werden kann.

Fig. 7 zeigt Details eines Vorflügels 30, wobei dieser in seinem Bereich der Profilvorderkante 32 zwei Schichten aufweist, nämlich einen äußeren Erosionsschutzlack 50 und eine Opferschicht 52. Da vorzugsweise der Hauptstaudruckpunkt auf diesem Bereich des Vorflügels 30 liegt, ist dieser Bereich einer besonders starken Erosion unterworfen. Das Hauptprofil wird dabei deutlich weniger belastet als dies bei einem einstückigen Profil der Fall wäre. Mit der Erosionsschutzschicht 50 und der Opferschicht 52 kann ein lang anhaltender Betrieb des Rotorblatts mit Vorflügel 30 gewährleistet werden, so dass Wartungs- und Serviceintervalle und auch Austauschintervalle besonders lang sein können. Dieses ist insbesondere für den Betrieb offshore sehr günstig.

Bereits von vornherein kann die Erosionsschutzschicht 50 so ausgelegt sein, dass eine turbulente Umströmung stattfindet. Schmutzbelag bzw. Erosionsschäden führen dann nicht zu einer Veränderung der Strömungsverhältnisse.

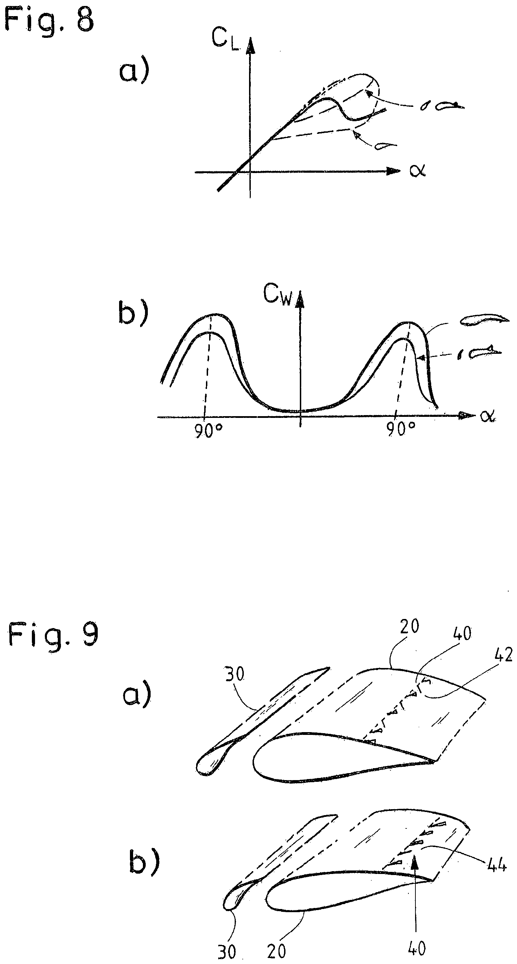

In Fig. 8a) und b) sind einerseits wiederum der Auftriebsbeiwert $C_L$ und andererseits der Widerstandsbeiwert $C_W$ als Funktion des Anstellwinkels $\alpha$ für ein Kombinationsprofil einerseits und für ein herkömmliches Profil andererseits gezeigt. Die Profile sind durch Symbole kenntlich gemacht.

In Fig. 8a) ist unter anderem die Stall-Hysterese für die beiden Fälle gezeigt, die bei größeren Anstellwinkeln $\alpha$ bei schnellen Änderungen des Anstellwinkels auftreten. Für ein herkömmliches einstöckiges Rotorblattprofil bedeckt die Hysterese einen sehr großen Bereich. Für das erfindungsgemäße Kombinationsprofil ist dieser Hysteresenbereich deutlich verkleinert. Außerdem ist in Fig. 8a) der weitere Verlauf zu größeren Anstellwinkeln $\alpha$ hin des stationären Auftriebsbeiwerts gezeigt.

In Fig. 8b) ist für einen Bereich von Anstellwinkeln zwischen etwa - 120° und +120° der Verlauf des Widerstandskoeffizienten $C_W$ dargestellt. Auch hier ist zu sehen, dass der maximale Widerstand bzw.

Widerstandskoeffizient für das Kombinationsprofil mit Vorflügel und Vortexgeneratoren deutlich gegenüber dem herkömmlichen Profil verringert ist.

In Fig. 9a) und 9b) sind zwei Varianten eines Abschnitts eines erfindungsgemäßen Kombinationsprofils gezeigt, die sich in der Anordnung der Vortexgeneratoren 40 unterscheiden. Hier ist in Fig. 9a) eine Anordnung mit einer paarweisen Konfiguration 42 und in Fig. 9b) eine Anordnung mit einer parallelen Konfiguration 44 gezeigt. Die paarweise Konfiguration 42 führt zur Bildung contra-rotierender Vortices bzw. Wirbel und die parallele Konfiguration 44 zur Bildung parallel rotierender oder co-rotierender Wirbel.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

Bezugszeichenliste

2     Rotorblatt
4     Rotorblattwurzel
6     Rotorblattspitze
7     Sehne
8     aerodynamisches Querschnittsprofil
10     Profilvorderkante
12     Profilhinterkante
14     Saugseite
16     Druckseite
17, 17'     Steg
18     blattspitzennaher Abschnitt
20     Hauptprofil
22     Strömungskanal
24     Profilvorderkante des Hauptprofils
30     Vorflügel
32     Profilvorderkante
33     Verwindung
34     Profilhinterkante
35     Saugseite des Vorflügels
36     Halter
36a     Abrundung
37     Verklebung
38     symmetrisches Halterprofil
39     Vorderkante des Halterprofils
40     Vortexgeneratoren
42     paarweise Konfiguration
44     parallele Konfiguration
50     Erosionsschutzlack
52     Opferschicht
$\alpha$     Anstellwinkel
$\alpha_{opt}$     optimaler Anstellwinkel
$\alpha_{min}$     minimaler Anstellwinkel
$\alpha_{max}$     maximaler Anstellwinkel
$\Delta\alpha_{op}$     Betriebsbereich der Anstellwinkel
$d\Delta\alpha_{op}^{SVG}$     Gewinn im Betriebsbereich
$C_L$     Auftriebsbeiwert ("lift coefficient")
$C_L^{min}$     minimaler Auftriebsbeiwert
$C_L^{max}$     maximaler Auftriebsbeiwert
$C_L^{max,SVG}$     maximaler Auftriebsbeiwert mit SVG-Profil
$C_W$     Widerstandsbeiwert

**Patentansprüche**

1. Rotorblatt (2) einer Windenergieanlage mit einer Längserstreckung, die sich von einer Rotorblattwurzel (4) zu einer Rotorblattspitze (6) erstreckt, wobei das Rotorblatt (2) wenigstens in einem Bereich seiner Längserstreckung ein aerodynamisches Querschnittsprofil (8) aufweist, das eine Profilvorderkante (10) und eine Profilhinterkante (12) aufweist, die über eine Saugseite (14) und eine Druckseite (16) des Querschnittsprofils (8) verbunden sind, **dadurch gekennzeichnet, dass** das Rotorblatt (2) in einem blattspitzennahen Abschnitt (18) ein Kombinationsprofil (20, 30) aus einem Hauptprofil (20), einem vor einer Profilvorderkante (24) des Hauptprofils (20) angeordnetem Vorflügel (30) und einem Strömungskanal (22) zwischen dem Vorflügel (30) und dem Hauptprofil (20) aufweist, wobei in dem blattspitzennahen Abschnitt (18) auf der Saugseite des Hauptprofils (20) Vortexgeneratoren (40) angeordnet sind, wobei der Vorflügel (30) eine Verwindung (33) aufweist, die einem Verlauf der Profilvorderkante (24) des Hauptprofils (20) angepasst ist und/oder der Vorflügel (30) blattspitzenseitig und/oder blattwurzelseitig gepfeilt ausgebildet ist, wobei der Vorflügel (30) mittels wenigstens eines Halters (36) am Hauptprofil (20) gehalten wird, der ein in einer Strömungsrichtung im Strömungskanal (22) symmetrisches aerodynamisches Profil aufweist.

2. Rotorblatt (2) nach Anspruch 1, **dadurch gekennzeichnet, dass** die Vortexgeneratoren (40) in einer Sehnenrichtung des Hauptprofils (20) hinter einem Punkt der maximalen Dicke des Hauptprofils (20) angeordnet sind, insbesondere in einem Bereich zwischen 50% und 95%, insbesondere zwischen 60% und 75%, der Sehne (7) des Hauptprofils (20).

3. Rotorblatt (2) nach Anspruch 1 oder 2, **dadurch gekennzeichnet, dass** der blattspitzennahe Abschnitt (18) in Längsrichtung des Rotorblatts (2) eine Länge von zwischen 5% und 30%, insbesondere zwischen 15% und 25% der Länge des Rotorblatts (2) von der Rotorblattwurzel (4) zur Rotorblattspitze (6) aufweist, wobei insbesondere der blattspitzennahe Bereich (18) in Längsrichtung des Rotorblatts (2) von der Rotorblattwurzel (4) an gerechnet zwischen 50% und 98% der Längserstreckung des Rotorblatts (2) angeordnet ist, insbesondere in einem Bereich zwischen 60% und 90% der Längserstreckung.

4. Rotorblatt (2) nach einem der Ansprüche 1 bis 3, **dadurch gekennzeichnet, dass** der Vorflügel (30) mit einer turbulenten Grenzschicht ausgelegt ist, insbesondere eine angeraute oder strukturierte Oberfläche aufweist.

**5.** Rotorblatt (2) nach einem der Ansprüche 1 bis 4, **dadurch gekennzeichnet, dass** der Vorflügel (30) eine Ausdehnung von weniger als 30% der gesamten Sehnenlänge des Kombinationsprofils (20, 30) aufweist.

**6.** Rotorblatt (2) nach einem der Ansprüche 1 bis 5, **dadurch gekennzeichnet, dass** der Vorflügel (30) in einer Fortsetzung der Profilvorderkante (10) des Rotorblatts (2) außerhalb des blattspitzennahen Abschnitts (18) angeordnet und geformt ist.

**7.** Rotorblatt (2) nach einem der Ansprüche 1 bis 6, **dadurch gekennzeichnet, dass** der Vorflügel (30) eine Verwindung (33) aufweist, die einem Verlauf der Profilvorderkante (24) des Hauptprofils (20) angepasst ist und/oder der Vorflügel (30) blattspitzenseitig und/oder blattwurzelseitig gepfeilt ausgebildet ist.

**8.** Rotorblatt (2) nach einem der Ansprüche 1 bis 7, **dadurch gekennzeichnet, dass** die Kombination aus Vorflügel (30) und Hauptprofil (20) eine relative Dicke von weniger als 35% aufweist, wobei insbesondere die maximale Dicke an radialen Positionen von mehr als 40% positioniert ist.

**9.** Rotorblatt (2) nach einem der Ansprüche 1 bis 8, **dadurch gekennzeichnet, dass** Übergänge zwischen dem Halter (36) einerseits und dem Vorflügel (30) und/oder dem Hauptprofil (20) andererseits abgerundet sind.

**10.** Rotorblatt (2) nach einem der Ansprüche 1 bis 9, **dadurch gekennzeichnet, dass** der Vorflügel (20) über eine Steckverbindung lösbar mit dem wenigstens einen Halter (36) verbunden oder verbindbar ist.

**11.** Rotorblatt (2) nach einem der Ansprüche 1 bis 10, **dadurch gekennzeichnet, dass** der wenigstens eine Halter (36), insbesondere mittels einer Verklebung (37), mit einem Steg (17) des Hauptprofils (20) verbunden ist.

**12.** Rotorblatt (2) nach einem der Ansprüche 1 bis 11, **dadurch gekennzeichnet, dass** der Vorflügel (30) wenigstens im Bereich einer Profilvorderkante (32) des Vorflügels (30) einen Erosionsschutzlack (50) und/oder eine Opferschicht (52) aufweist.

**13.** Windenergieanlage mit wenigstens einem Rotorblatt (2) nach einem der Ansprüche 1 bis 12.

**Claims**

**1.** Rotor blade (2) of a wind energy plant comprising a longitudinal extension, which extends from a rotor blade root (4) towards a rotor blade tip (6), wherein the rotor blade (2) comprises an aerodynamic cross section profile (8) in at least one area of its longitudinal extension, which comprises a profile leading edge (10) and a profile trailing edge (12) which are connected by a suction side (14) and a pressure side (16) of the cross section profile (8), **characterized in that** the rotor blade (2) comprises a combination profile (20, 30) of a main profile (20), a forewing (30) arranged before a profile leading edge (24) of the main profile (20) and a flow channel (22) arranged between the forewing (30) and the main profile (20) within a section near a blade tip (18), wherein vortex generators (40) are arranged in the section near the blade tip (18) on the suction side of the main profile (20), wherein the forewing (30) comprises a winding (33), which is adapted to a course of the profile leading edge (24) of the main profile (20), and/or the forewing (30) is arrow shaped on the blade tip side and/or on the blade root side, wherein the forewing (30) is held by at least one mount (36) at the main profile (20), which comprises a symmetrical aerodynamic profile within a flow direction in the flow channel (22).

**2.** Rotor blade (2) according to claim 1, **characterized in that** the vortex generators (40) are arranged in a chord direction of the main profile (20) behind a point of the maximum thickness of the main profile (20), in particular within an area between 50% and 95%, in particular between 60% and 75%, of the chord (7) of the main profile (20).

**3.** Rotor blade (2) according to claim 1 or 2, **characterized in that** the section near the blade tip (18) comprises a length of between 5% and 30%, in particular between 15% and 25% of the length of the rotor blade (2) from the rotor blade root (4) towards the rotor blade tip (6) in longitudinal direction of the rotor blade (2), wherein in particular the section near the blade tip (18) is arranged in longitudinal direction of the rotor blade (2) starting from the rotor blade root (4) between 50% and 98% of the longitudinal extension of the rotor blade (2), in particular within an area between 60% and 90% of the longitudinal extension.

**4.** Rotor blade (2) according to one of the claims 1 to 3, **characterized in that** the forewing (30) is designed with a turbulent boundary layer, in particular comprising a roughened or structured surface.

**5.** Rotor blade (2) according to one of the claims 1 to 4, **characterized in that** the forewing (30) comprises an expansion of less than 30% of the complete chord length of the combination profile (20, 30).

**6.** Rotor blade (2) according to one of the claims 1 to 5, **characterized in that** the forewing (30) is arranged and designed in a continuation of the profile leading edge (10) of the rotor blade (2) outside of the section near the blade tip (18).

7. Rotor blade (2) according to one of the claims 1 to 6, **characterized in that** the forewing (30) comprises a winding (33), which is adapted to a course of the profile leading edge (24) of the main profile (20) and/or that the forewing (30) is arrow shaped on the blade tip side and/or the blade root side.

8. Rotor blade (2) according to one of the claims 1 to 7, **characterized in that** the combination of forewing (30) and main profile (20) comprises a relative thickness of less than 35%, wherein in particular the maximum thickness is positioned at radial positions of more than 40%.

9. Rotor blade (2) according to one of the claims 1 to 8, **characterized in that** the transitions between the mount (36) on the one hand and the forewing (30) and/or the main profile (20) on the other hand are rounded.

10. Rotor blade (2) according to one of the claims 1 to 9, **characterized in that** the forewing (20) is detachable connected or connectable with the at least one mount (36) by a plug connection.

11. Rotor blade (2) according to one of the claims 1 to 10, **characterized in that** the at least one mount (36) is connected with a web (17) of the main profile (20), in particular via an adhesion (37).

12. Rotor blade (2) according to one of the claims 1 to 11, **characterized in that** the forewing (30) comprises an erosion protective lacquer (50) and/or a sacrificial layer (52) at least in the area of a profile leading edge (32) of the forewing (30).

13. Wind energy plant comprising at least one rotor blade (2) according to one of the claims 1 to 12.

**Revendications**

1. Pale de rotor (2) d'une éolienne présentant une extension longitudinale, qui s'étend depuis un pied de pale de rotor (4) vers une pointe de pale de rotor (6), dans laquelle la pale de rotor (2) présente au moins dans une zone de son extension longitudinale un profil de section transversale (8) aérodynamique, qui présente un bord d'attaque profilé (10) et un bord de fuite profilé (12), qui sont reliés par l'intermédiaire d'un extrados du coté aspiration (14) et d'un intrados (16) du coté pression du profil de section transversale (8), **caractérisée en ce que** la pale de rotor (2) présente, dans une section (18) proche de la pointe de la pale, un profil combiné (20, 30) composé d'un profil principal (20), d'un bec de bord d'attaque (30) disposé devant un bord d'attaque profilé (24) du profil principal (20) et d'un canal d'écoulement (22) entre le bec de bord d'attaque (30) et le profil principal (20), dans laquelle des générateurs de tourbillons (40) sont disposés dans la section (18) proche de la pointe de la pale sur l'extrados du profil principal (20), dans laquelle le bec de bord d'attaque (30) présente une torsion (33), qui est adaptée à un profilé du bord d'attaque profilé (24) du profil principal (20) et/ou le bec de bord d'attaque (30) est réalisée en forme de flèche du côté de la pointe de pale et/ou du côté du pied de pale, dans laquelle le bec de bord d'attaque (30) est maintenu au niveau du profil principal (20) au moyen d'au moins un système de maintien (36), qui présente un profil aérodynamique symétrique dans une direction d'écoulement dans le canal d'écoulement (22).

2. Pale de rotor (2) selon la revendication 1, **caractérisée en ce que** les générateurs de tourbillons (40) sont disposés dans une direction de corde du profil principal (20) derrière un point de l'épaisseur maximale du profil principal (20), en particulier dans une plage comprise entre 50 % et 95 %, en particulier entre 60 % et 75 %, de la corde (7) du profil principal (20).

3. Pale de rotor (2) selon la revendication 1 ou 2, **caractérisée en ce que** la section (18) proche de la pointe de la pale présente, dans le sens longitudinal de la pale de rotor (2), une longueur comprise entre 5 % et 30 %, en particulier entre 15 % et 25 % de la longueur de la pale de rotor (2) allant du pied de pale de rotor (4) à la pointe de pale de rotor (6), dans laquelle en particulier la zone (18) proche de la pointe de pale est disposée dans le sens longitudinal de la pale de rotor (2) à partir du pied de pale de rotor (4) sur une proportion comprise entre 50 % et 98 % de l'extension longitudinale de la pale de rotor (2), en particulier dans une plage comprise entre 60 % et 90 % de l'extension longitudinale.

4. Pale de rotor (2) selon l'une quelconque des revendications 1 à 3, **caractérisée en ce que** le bec de bord d'attaque (30) est configuré avec une interface turbulente, en particulier présente une surface rendue rugueuse ou structurée.

5. Pale de rotor (2) selon l'une quelconque des revendications 1 à 4, **caractérisée en ce que** le bec de bord d'attaque (30) présente une extension inférieure à 30 % de la longueur de corde totale du profil combiné (20, 30).

6. Pale de rotor (2) selon l'une quelconque des revendications 1 à 5, **caractérisée en ce que** le bec de bord d'attaque (30) est disposé et moulé dans un prolongement du bord d'attaque profilé (10) de la pale de rotor (2) à l'extérieur de la section (18) proche de la pointe de pale.

7. Pale de rotor (2) selon l'une quelconque des revendications 1 à 6, **caractérisée en ce que** le bec de bord d'attaque (30) présente une torsion (33), qui est adaptée à un profilé du bord d'attaque profilé (24) du profil principal (20), et/ou le bec de bord d'attaque (30) est réalisé à la manière d'un flèche du côté de la pointe de pale et/ou du côté du pied de pale.

8. Pale de rotor (2) selon l'une quelconque des revendications 1 à 7, **caractérisée en ce que** la combinaison composée du bec de bord d'attaque (30) et du profil principal (20) présente une épaisseur relative inférieure à 35 %, dans laquelle en particulier l'épaisseur maximale est positionnée sur des positions radiales de plus de 40 %.

9. Pale de rotor (2) selon l'une quelconque des revendications 1 à 8, **caractérisée en ce que** des transitions entre le système de maintien (36) d'une part et le bec de bord d'attaque (30) et/ou le profil principal (20) d'autre part sont arrondies.

10. Pale de rotor (2) selon l'une quelconque des revendications 1 à 9, **caractérisée en ce que** le bec de bord d'attaque (20) est relié ou peut être relié de manière amovible à l'au moins un système de maintien (36) par l'intermédiaire d'une liaison par enfichage.

11. Pale de rotor (2) selon l'une quelconque des revendications 1 à 10, **caractérisée en ce que** l'au moins un système de maintien (36) est relié à une entretoise (17) du profil principal (20) en particulier au moyen d'un collage (37).

12. Pale de rotor (2) selon l'une quelconque des revendications 1 à 11, **caractérisée en ce que** le bec de bord d'attaque (30) présente, au moins dans la zone d'un bord d'attaque profilé (32) du bec de bord d'attaque (30), un vernis de protection anti-érosion (50) et/ou une couche sacrificielle (52).

13. Eolienne comprenant au moins une pale de rotor (2) selon l'une quelconque des revendications 1 à 12.

Fig.1

a)

b)

Fig. 2

Fig. 3

Fig. 4

A : A

Fig. 5

Fig. 6

Fig. 7

Fig. 8

a)

b)

Fig. 9

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2253834 A1

**In der Beschreibung aufgeführte Nicht-Patentliteratur**

- **E. HAU.** Windkraftanlagen - Grundlagen, Technik, Einsatz, Wirtschaftlichkeit. Springer-Verlag, 2008, 120